# EUROPÄISCHE PATENTSCHRIFT

(11) **EP 1 584 869 B1**
(45) Veröffentlichungstag und Bekanntmachung des Hinweises auf die Patenterteilung: **08.06.2011**
(21) Anmeldenummer: 04008219.0
(22) Anmeldetag: 05.04.2004
(51) Int. Cl.: F23L 15/02, F28D 19/04

(54) **Dreh-Regenerator**
Rotary Regenerator
Régénérateur rotatif

(43) Veröffentlichungstag der Anmeldung: 12.10.2005
(73) Patentinhaber: Balcke-Dürr GmbH, 57482 Wenden (DE)
(72) Erfinder: Flender, Manfred, 57258 Freudenberg (DE)
(74) Vertreter: Lang, Friedrich

(56) Entgegenhaltungen:
- GB-A- 798 108
- GB-A- 917 307
- GB-A- 960 821
- US-A- 4 627 485
- US-B1- 6 345 442

## Beschreibung

Die Erfindung betrifft einen Dreh-Regenerator gemäß dem Oberbegriff des Anspruchs 1, der im Systemverbund mit einem Brenner betrieben wird.

Derartige Vorrichtungen werden zur Ressourcensicherung durch Minimierung des Brennstoffverbrauchs und zur Senkung der CO₂ Emissionen unter anderem im Bereich der Hochtemperatur-Prozessfeuerungen der Eisen-, Stahl-, NE-Metall- und Keramikindustrien verwendet. Dabei wird durch einen Wärmetauscher dem Abgas der Hochtemperatur-Prozessfeuerung eine darin enthaltene Wärmemenge entzogen und zur Vorwärmung der Luft benutzt, die der Feuerung zugeführt wird. Diese dem Feuer zugeführte Luft wird auch als Brennluft bezeichnet. Die dadurch erhöhte Brennluftwärme substituiert Teile der im Brennstoff enthaltenen Energie, wodurch die für die Feuerung benötigte Brennstoffmenge reduziert wird. Dies erhöht den Wirkungsgrad einer Feuerung erheblich, da ein üblicher Abgasverlust bei Eisen- und Stahlindustrieöfen rund 70 % beträgt. Vor dem Hintergrund der deutlich gestiegenen Energiekosten besteht daher ein immer größerer Bedarf an wärmetechnisch optimierten Feuerungsprozessen und dazu geeigneten Vorrichtungen.

Zur Wärmerückgewinnung stehen grundsätzlich rekuperative oder regenerative Wärmetauschersysteme zur Verfügung. Bei den rekuperativen Wärmetauschern wird der heiße Abgasstrom direkt an den kalten Zuluftstrom angelegt und die Wärme wird unmittelbar durch eine Trennwand übertragen. Bei Regeneratoren wird die Wärme mit Hilfe eines wärmespeichernden Zwischenmediums übertragen.

Als besonders vorteilhaft für Industriefeuerungen haben sich Dreh-Regeneratoren erwiesen, bei denen auf einer Seite heißes Abgas und auf einer anderen Seite kalte Brennluft in einen sich langsam drehenden Rotor eingeblasen wird. Das heiße Abgas strömt durch den Rotor und erwärmt darin angeordnete Heizkörper, die diese Wärme speichern. Durch die Drehung des Rotors gelangen die aufgewärmten Heizkörper in den kalten Brennluftstrom und erwärmen dann die dort entlang strömende kalte Brennluft.

Da sich Abgas und Brennluft nicht vermischen sollen, ist bei Dreh-Regeneratoren die zuverlässige Trennung des Abgasstroms vom Brennluftstrom besonders wichtig. Üblicherweise geschieht dies dadurch, dass der Rotor bzw. sein Rotorgehäuse durch radial von der Rotordrehachse nach außen verlaufende gasdichte Sektorwände in eine Mehrzahl von Strömungskammern unterteilt wird. Durch die verschiedenen Kammern kann dann voneinander abgetrennt gleichzeitig Abgas bzw. Brennluft strömen.

Normalerweise werden der Abgasstrom und der Brennluftstrom einander entgegengesetzt strömend durch den Rotor geführt. So wird auf der Seite, auf der das Abgas in den Rotor eingeleitet wird, auch die erwärmter Brennluft aus dem Rotor heraus geführt. Man spricht hier von der heißen Seite des Rotors. Dem gegenüberliegend wird das abgekühlte Abgas ausgeblasen und die noch kühle Brennluft eingeblasen. Dies ist die sogenannte kalte Seite des Rotors.

Die Spalten zwischen dem sich drehenden Rotorgehäuse und den angrenzenden Luft bzw. Gasleitungen werden üblicher Weise durch ein den Rotor umfassendes Umfassungsdichtungssystem abgedichtet. Bei dieser Umfassungsdichtung wird der Rotor in ein feststehendes und ihn gasdicht umschließendes Regeneratorgehäuse eingesetzt. Das Regeneratorgehäuse weist auf der heißen Seite einen Gaseinlass und einen Luftauslass auf. Auf der kalten Seite des Regeneratorgehäuses sind entsprechend ein Gasauslass und ein Lufteinlass angeordnet. Das Abgas durchströmt also einen Abgasbereich, der sich von der heißen zur kalten Seite des Regenerators erstreckt während die Brennluft einen Brennluftbereich durchströmt, der sich von der kalten zur heißen Seite erstreckt.

Der Trennung von Abgasbereich und Brennluftbereich des Regeneratorgehäuses erfolgt durch zwei sich jeweils bis zum Rotor erstreckende Trennbauteile. Die Trennbauteile erstrecken sich jeweils so am Rotor entlang, dass von ihnen angrenzende Sektorwände des Rotors abgedeckt werden. Gegenüber den Sektorwänden des Rotors werden der Abgasbereich und der Brennluftbereich des Regeneratorgehäuses durch die sich in der Ebene der Trennbauteile erstreckende Umfassungsdichtung abgedichtet.

Die Umfassungsdichtung umfasst ein geschlossenes Dichtungsband, dass in einer zur Drehachse des Rotors parallel verlaufenden Ebene angeordnet und am Regeneratorgehäuse angebracht ist. Das Dichtungsband besteht daher mindestens aus zwei axialen und zwei radialen Dichtungslinien, die jeweils von außen auf den Rotor gedrückt werden. Dabei verlaufen die axialen Dichtungslinien parallel zum Rotorgehäuse und die radialen Dichtungslinien entlang der beiden Stirnseiten des Rotors. Bei einem sich um eine vertikale Drehachse drehenden Rotor sind daher die Radialdichtungsabschnitte annähernd horizontal und übereinander und die Axialdichtungen in vertikaler Richtung und parallel zueinander angeordnet, wobei die Axialdichtungen die Radialdichtungen miteinander verbinden. In der Seitenansicht sieht ein solches Dichtungssystem wie ein Rechteck aus, welches zusammen mit den Sektorwänden des Rotors die beiden Gasabschnitte voneinander trennt. Für die Dichtungen werden im Stand der Technik schmale linienhafte Dichtungsbänder aus Keramik oder Metall verwendet.

Problematisch ist nun, dass sich ein Rotor aufgrund der verschiedenen Temperaturen in seinem Inneren unterschiedlich ausdehnt und sich seine heiße Seite konvex nach außen wölbt. Da das den Rotor umgebende Regeneratorgehäuse in der Regel nicht annähernd so starke Temperaturverformungen erfährt, müssen die axialen und radialen Dichtungsabschnitte der Umfassungsdichtung gegenüber dem verformten Rotor angepasst werden. Dies geschieht beim Stand der Technik durch hydraulisches Anpressen der Axial- und der Radialdichtungen an den Rotor, was aber sehr aufwendig und störanfällig ist. Oftmals werden keine zufriedenstellenden Abdichtungsergebnisse erzielt und der Wirkungsgrad dieser Dreh-Regeneratoren leidet unter der ungenauen Abdichtung.

Als Alternative wurden bereits Dreh-Regeneratoren vorgestellt, bei denen der Rotor topfartig mit einem gelochten Boden und einem gelochten Deckel ausgebildet wird und bei dem eine seitliche Einhausung des Rotors entfällt. An die Stelle des einheitlichen Regeneratorgehäuses treten zwei feststehende Hauben zwischen denen sich der Rotor dreht. Der Einfachheit halber wird hier die Haube an der heißen Seite des Rotors als Heißhaube bezeichnet und die an der kalten Seite als Kalthaube. Entsprechend weist die Heißhaube einen Gaseinlass und einen Luftauslass auf, die durch ein erstes Trennbauteil getrennt sind, und die Kalthaube hat einen Gasauslass und einen Lufteinlass, die voneinander durch ein zweites Trennbauteil getrennt sind.

Die Abdichtung übernehmen bei diesen Rotoren der Topfboden und der Topfdeckel des Rotors, welche unmittelbar an die Kalthaube bzw. die Heißhaube mit den dazwischen liegenden Radialdichtungsabschnitten gepresst werden, wobei zwischen der jeweiligen Haube und dem Rotor jeweils eine Dichtung angeordnet ist. Dieses Dichtungsystem umfasst also nicht mehr den Rotor von außen. Vielmehr ist die Dichtung zweiteilig aufgelöst und besteht aus einem topfartigen Rotor mit Deckel und zwei von einander beabstandeten Dichtungsebenen an den Stirnseiten des Rotors. Nachteilig an dieser Lösung ist jedoch, die großflächige und oftmals die Luft- bzw. Gasströmung störende Deckelkonstruktion dieser Rotoren.

Ein weiteres Problem der bekannten Dreh-Regeneratoren liegt bei den Heizkörpern, die in die Rotoren eingesetzt werden. Üblicherweise handelt es sich hierbei um flächige Metallplatten mit wellenförmigen Querschnittsprofil, die aneinander gestapelt Luftkanäle zwischen den Platten bilden. Diese Platten werden üblicherweise in mehreren Lagen in Gerüste eingebracht und in den Gerüsten paketweise zwischen den Sektorwänden der Rotoren eingebaut. Zum Schutz vor aggressiven Abgasströmen oder Verschmutzungen durch darin enthaltene Rußpartikel sind die Metallplatten emailliert. Diese emaillierten Metallplatten können jedoch nur begrenzten Abgastemperaturen ausgesetzt werden. Insbesondere um den Wirkungsgrad von Hochtemperatur-Prozeßfeuerung zu verbessern, ist es aber wünschenswert einen Regenerators auch bei besonders hohen Temperaturen von 1400 °C und mehr einzusetzen.

In jüngster Zeit wurden auch Rotoren vorgestellt, bei denen als Ersatz für die Metallheizkörper Keramikkugeln oder Schwammkörper lose in die unterteilten Sektoren geschüttet werden. Die keramischen Kugeln haben den Vorteil, dass sie wesentlich hitzebeständiger und unempfindlicher gegen die Rauchgaseinwirkung als die emaillierten Metallheizkörper sind. Gleichzeitig haben diesen Rotoren aber einen erhöhten strömungstechnischen Widerstand und eine große Baugröße.

Ein Dreh-Regenerator der eingangs genannten Art ist in der US 4,627,485 A beschrieben. Weitere gattungsgemäße Vorrichtungen, die eine Kühlung von anderen Teilen des Regenerators wie zum Beispiel der Axialdichtelemente, der Heißhaube oder Tragteilen herbeiführen, sind aus GB 960 821 A, GB 798 108 A bzw. GB 917 307 A bekannt. Nachteilig an allen vorgenannten Regeneratoren ist die aufwendige oder ungenügende Abdichtung des Rotors und die relativ großen Baugrößen bei einer allgemein begrenzten Temperaturbeständigkeit.

Der Erfindung liegt daher die Aufgabe zugrunde, einen Dreh-Regenerator anzugeben, der eine bessere Abdichtung des Rotors garantiert, wesentlich kleiner und auch bei deutlich erhöhten Abgastemperaturen von über 1400 °C einsetzbar und insgesamt kostengünstiger herzustellen ist.

Die Lösung dieser Aufgabe gelingt mit dem Dreh-Regenerator gemäß Anspruch 1. Vorteilhafte Weiterbildungen sind in den Unteransprüchen angegeben.

Der erfindungsgemäße Dreh-Regenerator weist als Rotor einen zwischen einer feststehenden Heißhaube und einer feststehenden Kalthaube drehbaren Wärmetauscher mit einem Rotorgehäuse auf, in dem wärmespeichernde Heizkörper angeordnet sind. Der Rotor wird also nicht in einem Regeneratorgehäuse eingehaust und folglich auch nicht von einer Umfassungsdichtung abgedichtet.

Wie bereits erwähnt, sind hier unter der Heißhaube bzw. der Kalthaube die auf der heißen Seite des Wärmetauschers befindlichen feststehenden Ein- bzw. Auslassvorrichtungen für den durchzuleitenden Abgasstrom und den zum Feuer bzw. Brenner hinzuleitenden Zuluftstrom zu verstehen. Demnach weist die Heißhaube einen Gaseinlass und einen Luftauslass auf, die voneinander durch ein erstes Trennbauteil getrennt sind. In die Heißhaube wird anders ausgedrückt der heiße Abgasstrom eingeleitet und auf den Rotor gerichtet.

Die Kalthaube entspricht grundsätzlich der Heißhaube, nur dass sie an der kalten Seite des Dreh-Regenerators angeordnet ist und entsprechend einen Gasauslass und einen Lufteinlass aufweist, die voneinander durch ein zweites Trennbauteil getrennt sind. Durch die Kalthaube werden also die abgekühlten Abgases aus dem Rotor weg abgeleitet und gleichzeitig die noch kalte Frischluft bzw. Brennluft dem Rotor zur Erwärmung zugeleitet.

Ferner ist beim erfindungsgemäßen Dreh-Regenerator zwischen der Heißhaube und dem Rotor eine Heißdichtung und zwischen der Kalthaube und dem Rotor eine Kaltdichtung jeweils an der dem Rotor zugewandten Seite der Heißhaube oder der Kalthaube angeordnet. Es werden also lediglich die Stirnseiten des Rotors abgedichtet, wobei die Begriffe Heißdichtung und Kaltdichtung verdeutlichen sollen, wo sich die jeweilige Dichtung befindet, also auf der heißen bzw. der kalten Seite des Rotors.

Der erfindungsgemäße Dreh-Regenerator unterscheidet sich nun von den bekannten Dreh-Regeneratoren dadurch, dass sowohl die Heißdichtung als auch die Kaltdichtung jeweils ein einer rohrförmigen Außenwand des Rotorgehäuses entsprechender massiver Dichtungsring zur umfänglichen Abdichtung des Rotors mit einem am jeweiligen Trennbauteil anliegenden Innendichtungsabschnitt zur radialen Abdichtung des Rotors ist. Wobei der Innendichtungsabschnitt des Dichtungsrings vorzugsweise die Breite des jeweiligen Trennbauteils aufweist und die Heißdichtung über eine Kühlung verfügt. Zudem sind im Rotorgehäuse keramische Kapillar-Heizkörper und metallische Flächen-Heizkörper vorgesehen, von denen die metallischen Flächen-Heizkörper vorzugsweise an der der Kalthaube zugewandten Seite des Rotors angeordnet sind.

Erfindungsgemäß wird also kein topfförmiger Rotor mehr verwendet sondern ein rohrförmiger, wobei durch die rohrförmige Ausbildung der Außenwand des drehbaren Rotorgehäuses, sich ein strömungstechnisch sehr günstiges Anströmverhalten des Rotors ergibt. Dies reduziert den Energiebedarf zur Förderung der Luft- bzw. Abgasströme. Zusammen mit den im wesentlichen orthogonal zur Rotationsachse des Rotors verlaufenden Dichtungsebenen an der kalten und der heißen Seite des Rotors ergibt sich ein besonders gut abzudichtendes Rotorgehäuse, da die Ringoberflächen des Rotorgehäuses sich weniger stark verformen, als z.B. auf der kalten bzw. warmen Stirnseite des Rotors angeordnete durchgehende Dichtungsdeckel. Durch die ringförmigen Stirnflächen reduziert sich der Reibungswiderstand zwischen den Dichtungen und dem Rotor. Zugleich kann auf eine komplette Einhausung des Rotors mit axialer Abdichtung parallel zur Gehäuseaußenwand verzichtet werden.

Die radiale Abdichtung des Rotors, also die Trennung von Abgas und Brennluft, erfolgt durch die sich über den gesamten Rotordurchmesser erstreckenden, an den Trennbauteilen angeordneten Innendichtungsabschnitte. Diese wirken zusammen mit den Kapillar-Heizkörpern und/oder gegebenenfalls angeordneten den Rotor in Strömungssektoren aufteilenden Sektorwänden, indem sie unmittelbar an die Wandungen der Heizkörper bzw. die Sektorwände des Rotors grenzen.

Mit Hilfe der Kühlung wird die insbesondere aufgrund der hohen Temperaturen stark belastete Heißdichtung in ihrem thermischen Verhalten an das des Rotors angepasst. So verringern sich die thermischen Spannungen in der massiven Dichtung und es können mit Hilfe der Kühlung exakt die Temperaturen bzw. Dehnungen in der Dichtung erzeugt werden, die auch im Rotor vorliegen. Somit kann man auf einfache Weise und ohne großen mechanische Aufwand den Dichtungsspalt zwischen Heißhaube effektiv verringern und gleichzeitig die Dichtwirkung der Dichtung verbessern.

Schließlich wird durch die Kombination von keramischen und metallischen Heizflächen gegenüber einem aus rein keramischen Speicherelementen bestehenden Heizkörper eine Reduzierung um 20 % der Baugröße bei gleicher Leistungsfähigkeit des Wärmetauschers realisiert. Dies vergrößert besonders den Einsatzbereich des Dreh-Regenerators.

Dabei sind unter den metallischen Flächen-Heizkörpern die vorstehend beschriebenen allgemein bekannten aus flächigen und gewellten Metallplatten bestehenden Plattenbündel zu verstehen. Die keramischen Kapillar-Heizkörpern zeichnen sich dadurch aus, dass sie Keramikkörper sind, die von einer Vielzahl kleiner durchgängiger paralleler Röhrchen durchzogenen sind. Die Kapillaren der Kapillar-Heizkörpern werden durch die Wandungen gebildet, die selbst wiederum gasdicht sind. Durch die kann Verwendung von aneinander gelegten in Strömungsrichtung weisenden Kapillar-Heizkörper kann auf eine Vielzahl von Radialwänden zur Abdichtung der beiden Strömungen im Rotorgehäuse verzichtet werden, da die Kapillar-Heizkörper selbst ein Vermischen von Abgas mit Brennluft verhindern. So ist es zum Beispiel nicht mehr erforderlich, das wenigstens zwei Sektorwände des Rotors an einem Trennbauteil zur sicheren Abdichtung anliegen, sondern es braucht bei dem erfindungsgemäßen Dreh-Regenerator gar keine Sektorwand mehr an den Trennbauteilen anliegen.

Die erfindungsgemäße Kombination der Metall- und Keramikheizflächen ergibt also eine Kostenersparnis, da weniger und kleinere Gehäuseteile verwendet werden und der Rotor bei gleicher Dichtwirkung insgesamt leichter ist. Dies führt auch zu Einsparungen an der Antriebsleistung, die wiederum den Wirkungsgrad des Dreh-Regenerators weiter erhöhen.

In einer bevorzugten Weiterbildung des Regenerators liegt das Oberflächenverhältnis der metallischen zu den keramischen Heizflächen zwischen einem Drittel und einem Viertel. Versuche haben gezeigt, dass hier ein optimaler Mix zwischen keramischen Kapillar-Heizkörpern und metallischen Flächen-Heizkörpern gegeben ist, da so ein ideales Verhältnis zwischen den relativ großflächigen keramischen Heizflächen und den weniger platzbenötigenden metallischen Heizflächen vorhanden ist. Zudem berücksichtigt dieses Verhältnis die für den Einsatz in Industrieöfen zu erwartenden Temperaturgefälle zwischen der heißen und der kalten Seite des Rotors.

Besonders effektiv wird zur Kühlung der Heißdichtung eine Fluidkühlung verwendet. Als Fluide kommen dabei Luft, Wasser oder ähnlich geeignete Kühlmittel in Frage, wobei vorzugsweise die Heißdichtung an ihrer Außenseite einen sie umgebenden Kühlkanal zur Luftkühlung hat.

Damit gegebenenfalls auftretende Undichtigkeiten an der Heißdichtung die Dichtung oder den Dreh-Regenerator nicht weiter schädigen, ist es zweckmäßig, wenn der Kühlkanal umlaufend verteilte und in Richtung des Rotors weisende Sperrluftaustritte zur Bildung eines einen Heißdichtungsspalt außen umgebenden Luftvorhang aufweist. Unter einem Heißdichtungsspalt ist in diesem Zusammenhang ein Spalt zwischen der Heißdichtung und dem Rotor oder ein Spalt in der Dichtung selbst gemeint. Der Luftvorhang sorgt dafür, dass gegebenenfalls durch diesen Spalt austretende heiße Gase sich mit der Kühlluft vermischen und nicht zu weiteren Schädigungen der Dichtung und der Umgebung führen. Dies vergrößert die Lebensdauer und erhöht nochmals die Dichtigkeit der Heißdichtung. Schädigungen können sich zum Beispiel dadurch ergeben, dass heißes Gas oder Brennluft an der Dichtung entlang strömt. Zudem wird dadurch das Rotorgehäuse ebenfalls gekühlt und dessen thermische Belastung weiter reduziert.

Um die thermischen Belastungen und die damit einhergehenden Ausdehnungen der Heißhaube zu reduzieren, weist das erste Trennbauteil in einer bevorzugten Weiterbildung eine Trennbauteilkühlung auf, die vorzugsweise als zwischen dem Gaseinlass und dem Luftauslass angeordneter Luftkühlungskanal ausgebildet ist. Diese ist dicht an der, der Heißdichtung zugewandten, Außenseite des Trennbauteils angeordnet, wobei auch Lösungen mit einem im Trennbauteil angeordneten Lüftungskanal vorteilhaft sind, da hierbei auch der angrenzende Innendichtungsabschnitt der Heißdichtung gekühlt werden kann. Dann lassen sich mit der Trennbauteilkühlung und der Heißdichtungskühlung die thermischen Unterschiede zwischen Trennbauteil bzw. Heißhaube und Heißdichtung reduzieren. Unabhängig von der Anordnung der Kühlung im Trennbauteil bilden die Trennbauteilkühlung und die Kühlung der Heißdichtung bevorzugt ein gemeinsames und zusammenhängendes Kühlungssystem.

Bevorzugt bestehen die keramischen Heizkörper zumindest teilweise aus einer Salzkeramik mit latenten Wärmespeichereigenschaften. Besonders gut geeignet sind jedoch vollständig aus Salzkeramik bestehende keramische Heizkörper, die bevorzugt an den äußeren Rändern des Rotors angeordnet sind.

Weiterbildend weist die Außenwand des Rotorgehäuses ein tragendes Hüllrohr und eine feuerfeste Wärmedämmung auf, wobei sich die Wärmedämmung vorzugsweise nur im Bereich der keramischen Heizkörper erstreckt. Dieser mehrschichtige Aufbau der Gehäusewandung reduziert die Gesamtverformung des Rotors, da die Einwirkung hoher Temperaturen auf das tragende Hüllrohr reduziert wird und sich dieses deutlich weniger verformt. Das verbessert die Abdichtung des Rotors und reduziert die Reibung zwischen Dichtung und dem Rotorgehäuse. Zudem ermöglicht dieser Wandaufbau auch den Einsatz des Dreh-Regenerators bei hohen Abgastemperaturen, da sich die Hitze nicht auf tragende Außenbauteile überträgt und diese schädigt. Insgesamt ergibt sich also eine weitere Optimierung des thermischen Verhaltens des Dreh-Regenerators.

Erfindungsgemäß ist der Rotor von einem Kettenantrieb angetrieben, der vorzugsweise ein am Rotor befestigtes Kettenrad aufweist, welches thermisch vom Rotor abgekoppelt ist. Die thermische Abkopplung kann z.B. durch eine zwischen dem Rotor und dem Kettenrad angeordnete Federung oder durch eine federnde Befestigung erfolgen. Durch die thermische Abkopplung des Kettenrades werden die Temperaturausdehnungen des Rotors nicht auf das Kettenrad übertragen, wodurch der Durchmesser des Kettenrades auch im Betrieb bei wechselnden Abgastemperaturen konstant bleibt.

wird der Rotor über einen Kettenantrieb angetrieben. Dieser Antrieb ist besonders gut auch bei hohen Temperaturen zuverlässig einsetzbar und ermöglicht erst die Verwendung des erfindungsgemäßen Dreh-Regenerators bei besonders hohen Abgastemperaturen, was wie geschildert dessen Wirkungsgrad erhöht.

Die Erfindung wird nachfolgend anhand einer Zeichnung näher erläutert. Daran zeigen schematisch:
- Fig. 1: einen Querschnitt durch ein erstes Ausführungsbeispiel eines erfindungsgemäßen Dreh-Regenerators;
- Fig. 2: einen Querschnitt durch ein zweites Ausführungsbeispiel eines erfindungsgemäßen Rotors;
- Fig. 3: eine Draufsicht auf eine metallische Kaltdichtung;
- Fig. 4: eine Draufsicht auf eine keramische Heißdichtung;
- Fig. 5: die vergrößerte Darstellung des in Fig. 1 mit einem Kreis angedeuteten Ausschnitts der Heißdichtung;
- Fig. 6: den Schnitt A-A durch die in Fig. 1 und Fig. 5 dargestellte Heißdichtung;
- Fig. 7: einen Querschnitt eines Kapillar-Heizkörpers mit rechteckiger Grundfläche;
- Fig. 8: einen Querschnitt eines Kapillar-Heizkörpers mit kreisförmiger Grundfläche;
- Fig. 9: einen Querschnitt eines Kapillar-Heizkörpers mit trapezförmiger Grundfläche; und
- Fig. 10: einen Querschnitt eines metallischen Flächen-Heizkörpers.

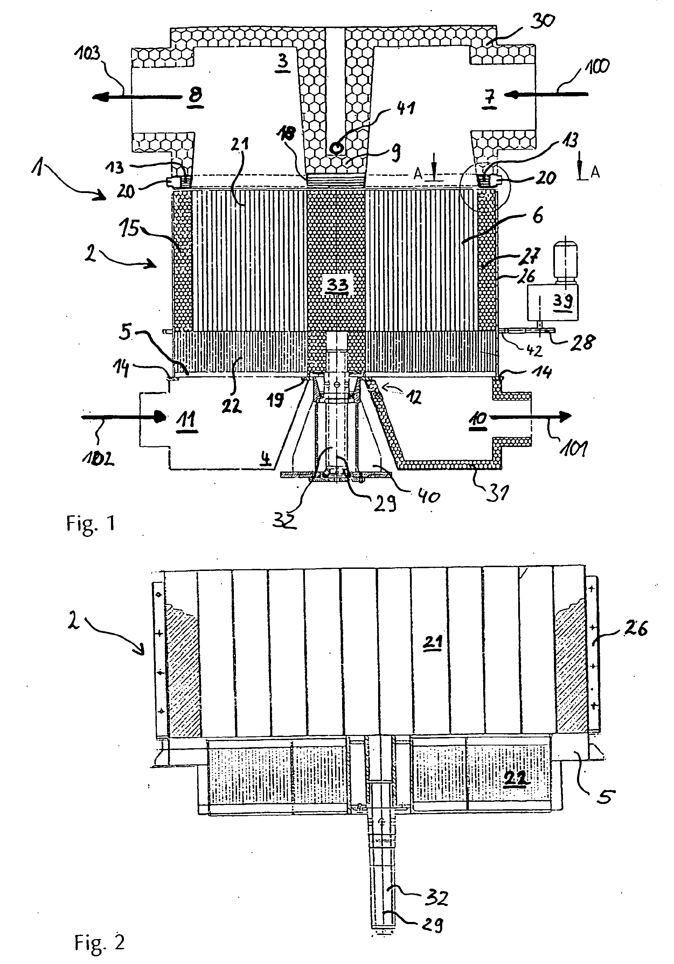

Der in Fig. 1 dargestellte Dreh-Regenerator 1 ist ein Ausführungsbeispiel für einen Regenerator, der zur Wärmerückgewinnung an einem Pfannenfeuer einer Stahlpfannen-Beheizung in einem Elektrostahlwerk gedacht ist. Dieser Dreh-Regenerator 1 weist einen, mit Hilfe eines Motors 39 über den Kettenantrieb 28 angetriebenen, sich um eine vertikale Drehachse 29 drehenden Rotor 2 auf, der zwischen einer Heißhaube 3 und einer Kalthaube 4 angeordnet ist. Der erfindungsgemäßen Dreh-Regenerator 1 ist also vertikal ausgerichtet, wobei es aber ohne weiteres möglich ist, ihn auch in anderen als der hier dargestellten Winkellage zu betreiben.

Die Heißhaube 3 weist einen Gaseinlass 7 und einen Luftauslass 8 auf, die jeweils durch ein Trennbauteil 9 voneinander getrennt sind. Das Trennbauteil 9 der Heißhaube ist hier mit einer Luftkühlung 41 versehen. Auf der anderen Seite des Rotors ist ein Gasauslass 10 zusammen mit einem Lufteinlass 11 in der Kalthaube 4 angeordnet, wobei Gasauslass 10 und Lufteinlass 11 voneinander durch ein zweites Trennbauteil 12 gasdicht voneinander getrennt sind.

Die vom Pfannenfeuer kommenden in den Dreh-Regenerator 1 eingeleiteten Abgasströme werden hier durch den Pfeil 100 symbolisiert. Heißes Abgas 100 tritt also durch den Gaseinlass 7 in den Dreh-Regenerator 1 in horizontaler Richtung ein. Im Gaseinlass 7 wird der horizontale Abgasstrom 100 in eine vertikale Richtung umgelenkt und auf den Rotor 2 gerichtet. Das Abgas 100 strömt durch den sich langsam um die vertikale Drehachse 29 drehenden Rotor 2 nach unten, wobei es die Heizkörper 6 durchströmt und sich dabei abkühlt. Dabei gibt das Abgas Wärme an die Heizkörper 6 ab, die diese speichern und strömt dann als abgekühlter Abgasstrom 101 durch den Gasauslass 10 aus dem Dreh-Regenerator 1. Dabei wird die zunächst noch vertikale Strömung durch den Gasauslass 10 in eine horizontal gerichtete Strömung umgelenkt.

Auf der der Abgasseite gegenüberliegenden Seite des Dreh-Regenerators 1 tritt kalte Brennluft 102 in den Lufteinlass 11 ein, wird dort von der ursprünglichen horizontalen Ausrichtung in eine nach oben gerichtete vertikale Strömung umgelenkt und auf den Rotor 2 gerichtet. Die kalte Brennluft 102 strömt dann durch den Rotor 2 und die zuvor erwärmten Heizkörper 6 nach oben, wobei die Brennluft zu einem heißen Brennluftstrom 103 aufgewärmt wird. Der heiße Brennluftstrom 103 wird durch den Luftauslass 8 von seiner ursprünglichen vertikalen in eine horizontal gerichtete Luftströmung umgelenkt und aus dem Dreh-Regenerator 1 geleitet.

Die Heizfläche 6 des Rotors 2 besteht aus zwei unterschiedlichen Schichten von Heizkörpern. An der unteren kalten Seite sind metallische Flächen-Heizkörper 22 und auf der warmen oberen Seite keramische Kapillar-Heizköper 21 angeordnet. Die rohrförmige Außenwand 15 des Rotorgehäuses 5 weist in diesem Ausführungsbeispiel einen zweischichtigen Aufbau auf, der aus einer tragenden Außenwand 26 aus Stahl und einer innenliegenden und nur im Bereich der keramischen Kapillar-Heizkörper 21 angeordneten feuerfesten Wärmeisolierungsschicht 27 besteht. Die Wärmeisolierung 27 ist eine feuerfeste Stampfmasse die es ermöglicht, den Wärmetauscher problemlos mit Temperaturen von 1400 °C bis 1600 °C und mehr zu beaufschlagen, während das geschweißte Rotorgehäuse 5 und insbesondere die Außenwand 26 vor Überhitzung geschützt werden.

An der Außenwand 26 des Rotors 2 ist das Kettenrad 42 des Rotor-Kettenantriebs 28 über in radialer Richtung federnde Befestigungselemente, von der thermischen Ausdehnung des Rotors 2 abgekoppelt, befestigt. So ergibt sich zusammen mit der bereits aufgrund der Wärmeisolierung 27 reduzierten Ausdehnung der Außenwand 26 ein im wesentlichen konstanter Durchmesser des Kettenrades 42. Mit anderen Worten erfolgt der Antrieb des Rotors 2 durch die in Drehrichtung steife Befestigung des Kettenrades 42 am Rotor 2 verlustfrei, während sich der Rotor in radialer Richtung gegenüber dem Kettenrad ausdehnen bzw. zusammenziehen kann, ohne dass sich diese Verformungen negativ auf das Kettenrad 42 übertragen.

Die Heißhaube 3 weist sowohl am Gaseinlass 7 wie auch am Luftauslass 8 und am Trennbauteil 9 jeweils an ihrer Innenseite also der mit den Gas- bzw. Luftströmen in Berührung stehenden Flächen eine wärmedämmende keramische Faserisolierung 30 auf. An der Kalthaube 4 ist nur der Gasauslass 10 ebenfalls innenliegend mit einer Wärmeisolierungsschicht 31 ausgekleidet, wobei bei diesem Ausführungsbeispiel eine Faserisolierung verwendet wird. Im Inneren des Rotors 2 befindet sich die Wärmedämmung 33, die den Innenbereich rund um die Drehachse 29 des Rotors gasdicht abdichtet und die, in ihrem unteren Teil in einer starren Halterung 40 gehaltene, Rotorwelle 32 vor Hitze schützt. Dieser Innenbereich 33 des Rotors 2 erstreckt sich von der metallischen Dichtung 14 bis zur keramischen Dichtung 13.

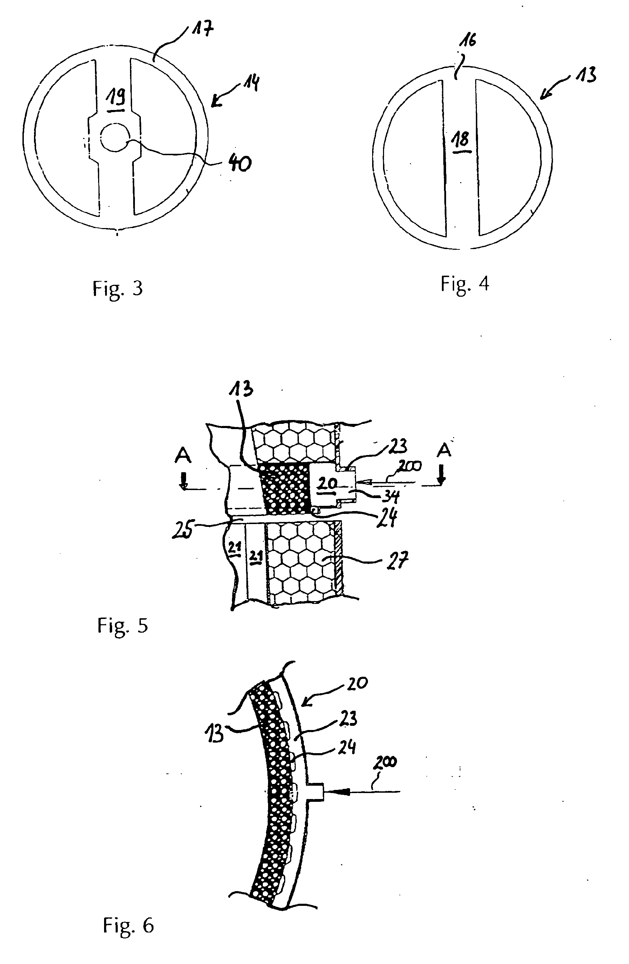

Die Abdichtung des Rotors 2 zur Heißhaube 3 hin erfolgt mit Hilfe einer luftgekühlten massiven keramischen Heißdichtung 13, welche an ihrem äußeren Umfang eine Kühlung 20 aufweist. Die Trennung des Abgasstromes 100 vom Brennluftstrom 103 erfolgt dabei durch das Trennbauteil 9, an dessen Unterseite sich der Innendichtungsabschnitt 18 der keramischen Heißdichtung 13 befindet. Die keramische Dichtung ist, wie in Fig. 4 zu erkennen, als Kreisring ausgelegt, welcher im Wesentlichen dem Durchmesser der kreiszylinderförmigen Rotorwand 15 entspricht. Der Dichtungsring 16 weist dabei einen Innendichtungsabschnitt 18 auf, dessen Breite, wie aus der Fig. 1 ersichtlich, der des Trennbauteils 9 entspricht. Die Breite der die Rotorachse 29 umhüllenden Stampfwärmedämmung 33 entspricht ebenfalls im Wesentlichen der Breite des Innendichtungsabschnitts 18 wodurch die Dichtung flächig auf der Wärmedämmung 33 und dem Innendichtungsabschnitt 18 anliegt.

Gegenüberliegend auf der kalten Seite des Rotors 2 befindet sich eine deutlich dünner ausgebildete metallische Dichtung 14, die ebenfalls massiv ausgeführt ist. Sie weist einen innenliegenden Innendichtungsabschnitt 19 und einen Kreisringdichtungsabschnitt 17 auf. Zusätzlich hat der Innendichtungsabschnitt 19 eine kreisförmige Durchlassöffnung 40 für die Rotorwelle 32, die durch die metallische Kaltdichtung 14 reicht. Der Abstand zwischen dem Rotor 2 und der Heißdichtung 13 und der Kaltdichtung 14 ist dabei jeweils in der Höhe einstellbar.

Das in Fig. 2 dargestellte zweite Ausführungsbeispiel eines erfindungsgemäßen Rotors 2 weist einen treppenförmigen Querschnitt auf. Dieser ergibt sich durch eine gegenüber den keramischen Kapillar-Heizkörpern 21 schmalere Ausführung der metallischen Flächen-Heizkörper 22. Dadurch kann eine platzsparendere Gestaltung des Dreh-Regenerators 1 erzielt werden. Die keramischen Kapillar-Heizkörper 21 sind nebeneinander stehend im Rotorgehäuse 5 angeordnet und erstrecken sich durchgehend von der Rotoroberseite bis zu den metallischen Flächenheizkörpern 22.

Fig. 5 und 6 zeigen weitere Details zur keramischen Heißdichtung 13. Wie bereits erwähnt weist sie eine Kühlung 20 auf, die in dem hier dargestellten Ausführungsbeispiel eine Luftkühlung mit einem Kühlkanal 23 ist. Der Kühlkanal 23 weist einen Kühllufteinlass 34 auf, durch den ein Kühlluftstrom 200 einströmt. Der Kühlluftstrom 200 wird durch den Kühlluftkanal 23 zur Kühlung um die Heißdichtung 13 in Umfangsrichtung herum geführt. So kann die Dichtung in ihrem thermischen Verhalten auf das thermische Verhalten der Rotorgehäusewand 15 angepasst werden und die Dichtigkeit der Dichtung erhöht werden.

Wie auch in Fig. 6 dargestellt sind die Sperrluftaustritte 24 gleichmäßig verteilt entlang der Dichtung 13 angeordnet. Die Sperrluftaustritte 24 richten Kühlluft in auf einen zwischen der Dichtung 13 und der Rotorgehäusewand 15 gebildeten Heißluftspalt 25. Die durch sie austretende Kühlluft strömt nach unten und verhindert ein Umströmen der Dichtung 13 durch heißes Gas und verringert so die thermische Belastung der keramischen Dichtung 13 in vorteilhafter Weise.

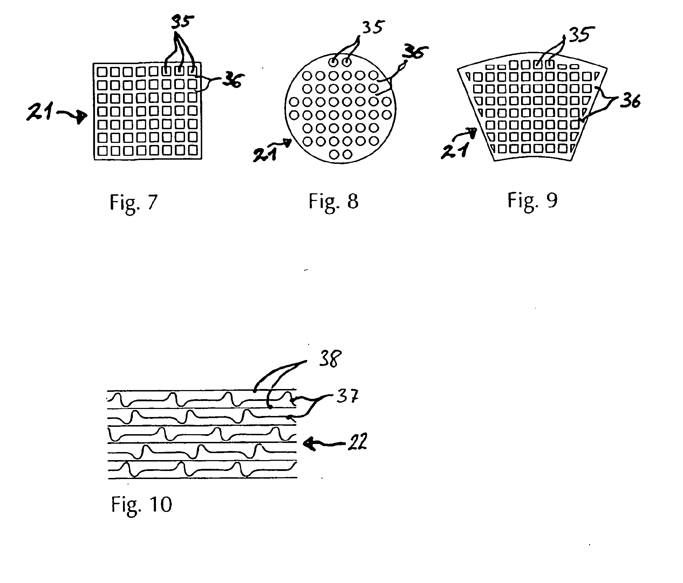

In Fig. 7, 8 und 9 sind drei unterschiedliche Querschnittsformen der keramischen Kapillar-Heizkörper 21 gezeigt. Dabei handelt es sich um längliche und nebeneinander im Rotorgehäuse 5 angeordnete Keramikkörper, die wiederum von einer Vielzahl von Kapillarkanälen 35 in ihrer Längsrichtung durchzogen sind. Dabei können die Kapillarkanäle 35 grundsätzlich mehreckige oder rundliche Querschnittsformen haben, z.B. runde, dreieckige oder viereckige Formen haben. Wichtig ist nur, dass die Kapillarwandungen 36 aus einem keramischen Material bestehen und gasdicht sind. Wie aus Fig. 8 und 9 ersichtlich, kann dabei eine runde oder bereichsweise runde Grundfläche für das Heizkörperelement 21 gewählt werden. Insbesondere der in Fig. 9 gezeigte trapezförmige Grundriß eignet sich für eine kreissektorenweise Anordnung der Heizkörper 21.

Fig. 10 zeigt wiederum einen Querschnitt eines unterhalb der keramischen Kapillar-Heizkörper 21 angeordneten metallischen Flächen-Heizkörper 22. Hierbei handelt es sich wie um einen an sich bekannten aus zusammengefassten profilierten Blechen bestehenden Hochleistungsheizkörper. Bei dem hier gezeigten Beispiel sind zwischen zwei gewellten Heizblechen 37 gerade Heizbleche 38 zur Kanalbildung angeordnet.

## Patentansprüche

1. Dreh-Regenerator (1), der als Rotor (2) einen zwischen einer feststehenden Heißhaube (3) und einer feststehenden Kalthaube (4) drehbaren Wärmetauscher mit einem Rotorgehäuse (5) aufweist, in dem wärmespeichernde Heizkörper (6) angeordnet sind, wobei die Heißhaube (3) einen Gaseinlass (7) und einen Luftauslass (8) aufweist, die voneinander durch ein erstes Trennbauteil (9) getrennt sind und die Kalthaube (4) einen Gasauslass (10) und einen Lufteinlass (11) aufweist, die voneinander durch ein zweites Trennbauteil (12) getrennt sind, bei dem zwischen der Heißhaube (3) und dem Rotor (2) eine Heißdichtung (13) und zwischen der Kalthaube (4) und dem Rotor (2) eine Kaltdichtung (14) jeweils an der dem Rotor (2) zugewandten Seite der Heißhaube (3) oder der Kalthaube (4) angeordnet ist, und wobei im Rotorgehäuse (5) keramische Kapillar-Heizkörper (21) und metallische Flächen-Heizkörper (22) vorgesehen sind, von denen die metallischen Flächen-Heizkörper (22) vorzugsweise an der der Kalthaube (4) zugewandten Seite des Rotors (2) angeordnet sind,
**dadurch gekennzeichnet,**
**dass** sowohl die Heißdichtung (13) als auch die Kaltdichtung (14) jeweils ein einer rohrförmigen Außenwand (15) des Rotorgehäuses (5) entsprechender massiver Dichtungsring (16, 17) zur umfänglichen Abdichtung des Rotors (2) mit einem am jeweiligen Trennbauteil (9, 12) anliegenden Innendichtungsabschnitt (18, 19) zur radialen Abdichtung des Rotors (2) ist, und dessen Innendichtungsabschnitt (18, 19) vorzugsweise die Breite des jeweiligen Trennbauteils (9, 12) aufweist, und dass die Heißdichtung (13) über eine Kühlung (20) verfügt.

2. Dreh-Regenerator nach Anspruch 1,
**dadurch gekennzeichnet,**
**dass** das Oberflächenverhältnis der metallischen zu den keramischen Heizflächen (22, 21) zwischen 1/3 und 1/4 liegt.

3. Dreh-Regenerator nach Anspruch 2,
**dadurch gekennzeichnet,**
**dass** die Kühlung (20) der Heißdichtung (13) eine Fluidkühlung ist, welche vorzugsweise ein die Außenseite der Heißdichtung (13) umgebender Kühlkanal (23) zur Luftkühlung ist.

4. Dreh-Regenerator nach Anspruch 3,
**dadurch gekennzeichnet,**
**dass** der Kühlkanal (23) umlaufend verteilte und in Richtung des Rotors (2) weisende Sperrluftaustritte (24) zur Bildung eines einen Heißdichtungsspalt (25) umgebenden Luftvorhangs aufweist.

5. Dreh-Regenerator nach einem der vorhergehenden Ansprüche,
**dadurch gekennzeichnet,**
**dass** das erste Trennbauteil (9) eine Trennbauteilkühlung (41) aufweist, die vorzugsweise als zwischen dem Gaseinlass (7) und dem Luftauslass (8) angeordneter Luftkühlungskanal ausgebildet ist.

6. Dreh-Regenerator nach einem der vorhergehenden Ansprüche,
**dadurch gekennzeichnet,**
**dass** die keramischen Heizkörper (21) zumindest teilweise aus einer Salzkeramik bestehen.

7. Dreh-Regenerator nach einem der vorhergehenden Ansprüche,
**dadurch gekennzeichnet,**
**dass** die Außenwand (15) des Rotorgehäuses (5) ein tragendes Hüllrohr (26) und eine feuerfeste Wärmedämmung (27) aufweist, die sich vorzugsweise nur im Bereich der keramischen Heizkörper (21) erstreckt.

8. Dreh-Regenerator nach einem der vorhergehenden Ansprüche,
**dadurch gekennzeichnet,**
**dass** die mit heißem Abgas in Berührung kommenden Bauteile des Regenerators (1) hitzebeständig, vorzugsweise mit Temperaturen von 1200°C bis zu 1600 °C beaufschlagbar, sind.

9. Dreh-Regenerator nach einem der vorhergehenden Ansprüche,
**dadurch gekennzeichnet,**
**dass** der Rotor (2) von einem Kettenantrieb (28) angetrieben ist, der vorzugsweise ein am Rotor (2) befestigtes Kettenrad aufweist, welches thermisch vom Rotor (2) abgekoppelt ist.

## Claims

1. A rotary regenerator (1), which has a heat exchanger having a rotor housing (5), which is rotatable between a stationary hot hood (3) and a stationary cold hood (4) as a rotor (2), in which heat-storing heating bodies (6) are situated, the hot hood (3) having a gas inlet (7) and an air outlet (8), which are separated from one another by a first separation component (9), and the cold hood (4) having a gas outlet (10) and an air inlet (11), which are separated from one another by a second separation component (12), in which a hot seal (13) is situated between the hot hood (3) and the rotor (2), and a cold seal (14) is situated between the cold hood (4) and the rotor (2), in each case on the side of the hot hood (3) or the cold hood (4) facing toward the rotor (2), and ceramic capillary heating bodies (21) and metal flat heating bodies (22) being provided in the rotor housing (5), of which the metal flat heating bodies (22) are preferably situated on the side of the rotor (2) facing toward the cold hood (4),
**characterized in that** both the hot seal (13) and also the cold seal (14) are each a solid seal ring (16, 17) corresponding to a tubular outer wall (15) of the rotor housing (5) for the peripheral seal of the rotor (2) having an inner seal section (18, 19), which presses against the respective separation component (9, 12), for the radial seal of the rotor (2), and its inner seal section (18, 19) preferably has the width of the respective separation component (9, 12), and the hot seal (13) has a cooling unit (20).

2. The rotary regenerator according to Claim 1,
**characterized in that** the surface ratio of the metal to the ceramic heating surfaces (22, 21) is between 1/3 and 1/4.

3. The rotary regenerator according to Claim 2,
**characterized in that** the cooling unit (20) of the hot seal (13) is a fluid cooling unit, which is preferably a cooling duct (23), which encloses the outer side of the hot seal (13), to the air cooling unit.

4. The rotary regenerator according to Claim 3,
**characterized in that** the cooling duct (23) has peripherally distributed sealing air outlets (24) pointing in the direction of the rotor (2) to form an air curtain enclosing a hot seal gap (25).

5. The rotary regenerator according to one of the preceding claims,
**characterized in that** the first separation component (9) has a separation component cooling unit (41), which is preferably implemented as an air cooling unit duct situated between the gas inlet (7) and the air outlet (8).

6. The rotary regenerator according to one of the preceding claims,
**characterized in that** the ceramic heating bodies (21) at least partially comprise a salt ceramic.

7. The rotary regenerator according to one of the preceding claims,
**characterized in that** the outer wall (15) of the rotor housing (5) has a supporting envelope pipe (26) and a refractory thermal insulation (27), which preferably only extends in the area of the ceramic heating bodies (21).

8. The rotary regenerator according to one of the preceding claims,
**characterized in that** the components of the generator (1) which come into contact with hot exhaust gas are heat resistant, and preferably can have temperatures of 1200°C up to 1600°C applied thereto.

9. The rotary regenerator according to one of the preceding claims,
**characterized in that** the rotor (2) is driven by a chain drive (28), which preferably has a sprocket fastened on the rotor (2), which is thermally decoupled from the rotor (2).

## Revendications

1. Régénérateur tournant (1) qui comporte, en tant que rotor (2), un échangeur de chaleur qui est mobile en rotation entre un capot chaud (3) fixe et un capot froid (4) fixe et qui comporte un carter (5) de rotor dans lequel sont disposés des radiateurs (6) accumulateurs de chaleur, où le capot chaud (3) comporte une entrée de gaz (7) et une sortie d'air (8) qui sont séparées l'une de l'autre par un premier élément de séparation (9) et où le capot froid (4) comporte une sortie de gaz (10) et une entrée d'air (11) qui sont séparées l'une de l'autre par un deuxième élément de séparation (12), dans lequel un joint chaud (13) est disposé entre le capot chaud (3) et le rotor (2) et un joint froid (14) entre le capot froid (4) et le rotor (2), chacun de ces joints étant disposés sur la face du capot chaud (3) ou du capot froid (4) respectivement tournée vers le rotor (2), des radiateurs capillaires en céramique (21) et des radiateurs plans en métal (22) étant prévus dans le carter (5) du rotor, les radiateurs plans en métal (22) étant de préférence disposés sur la face du rotor (2) qui est tournée vers le capot froid (4),
**caractérisé en ce**
**que** le joint chaud (13) comme le joint froid (14) sont chacun un anneau d'étanchéité (16, 17) plein correspondant à une paroi extérieure (15) tubulaire du carter (5) du rotor et destiné à assurer l'étanchéité du rotor (2) sur son pourtour avec un segment d'étanchéité interne (18, 19) en appui contre l'élément de séparation (9, 12) respectif destiné à assurer l'étanchéité radiale du rotor (2) et dont le segment d'étanchéité interne (18, 19) a de préférence la largeur de l'élément de séparation (9, 12) et que le joint chaud (13) dispose d'un système de refroidissement (20).

2. Régénérateur tournant selon la revendication 1,
**caractérisé en ce**
**que** le rapport de surface entre les surfaces chauffantes en métal et en céramique (22, 21) est compris entre 1/3 et 1/4.

3. Régénérateur tournant selon la revendication 2,
**caractérisé en ce**
**que** le système de refroidissement (20) du joint chaud (13) est un système de refroidissement fluide qui est de préférence un canal de refroidissement (23) entourant la face externe du joint chaud (13).

4. Régénérateur tournant selon la revendication 3,
**caractérisé en ce**
**que** le canal de refroidissement (23) comporte des sorties d'air de surpression (24) réparties sur le pourtour, dirigées vers le rotor (2) et destinées à former un rideau d'air entourant une fente de joint chaud (25).

5. Régénérateur tournant selon l'une quelconque des revendications précédentes,
**caractérisé en ce**
**que** le premier élément de séparation (9) comporte un système de refroidissement (41) des éléments de séparation qui est de préférence réalisé sous forme de canal de refroidissement d'air disposé entre l'entrée de gaz (7) et la sortie d'air (8).

6. Régénérateur tournant selon l'une quelconque des revendications précédentes,
**caractérisé en ce**
**que** les radiateurs céramique (21) sont réalisés, du moins en partie, en une céramique avec glaçure de sel.

7. Régénérateur tournant selon l'une quelconque des revendications précédentes,
**caractérisé en ce**
**que** la paroi externe (15) du carter (5) du rotor comporte une gaine (26) à capacité portante et une isolation thermique ignifuge (27) qui ne s'étend de préférence que dans la région des radiateurs céramique (21).

8. Régénérateur tournant selon l'une quelconque des revendications précédentes,
**caractérisé en ce**
**que** les éléments du régénérateur (1) qui viennent au contact de gaz d'échappement chauds résistent à la chaleur et peuvent de préférence être soumis à des températures comprises entre 1200 °C et 1600 °C.

9. Régénérateur tournant selon l'une quelconque des revendications précédentes,
**caractérisé en ce**
**que** le rotor (2) est entraîné par une commande à chaîne (28) comportant de préférence une roue à chaîne qui est fixée sur le rotor (2) et qui est thermiquement découplée du rotor (2).
